# EUROPEAN PATENT SPECIFICATION

(11) **EP 2 083 409 B1**
(45) Date of publication and mention of the grant of the patent: **17.03.2010**
(21) Application number: 09159699.9
(22) Date of filing: 26.05.2006
(51) Int. Cl.: G08G 1/09

(54) **Method and device for processing a traffic message structure including traffic data and location data**
Verfahren und Vorrichtung zur Verarbeitung eines Verkehrsnachrichtenformats, das Verkehrsdaten und Ortdaten enthält
Procédé et dispositif pour traiter un format de données de trafic incluant des données de trafic et des données de position

(30) Priority: 27.05.2005 US 684971 P; 19.10.2005 KR 20050098754
(43) Date of publication of application: 29.07.2009
(62) Divisional of application: 06747461.9
(73) Proprietor: LG Electronics Inc., Seoul 150-721 (KR)
(72) Inventor: Moon, Kyoung Soo, 137-130 Seoul (KR); Kim, Jun, 137-130 Seoul (KR); Lee, Sang Hyup, 137-130 Seoul (KR)
(74) Representative: Cabinet Plasseraud

(56) References cited:
- EP-A- 1 150 265
- WO-A-02/13161

## Description

### 1. Technical Field

This disclosure relates to encoding and decoding traffic information that includes media information associated with traffic information or locations.

### 2. Background Art

With the advancement in digital signal processing and communication technologies, radio and TV broadcasts are being digitalized. Digital broadcasting enables provision of various information (e.g., news, stock prices, weather, traffic information, etc.) as well as audio and video content.

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, which each could be configured to detect and interpret traffic information broadcast in the same way.

Documents WO 02/13 161 and EP 1 150 265 describe existing traffic management systems.

### 3. Disclosure of Invention

A first aspect of the present invention relates to a method for processing a traffic message structure according to claim 1.

A second aspect of the present invention relates to a device for processing a traffic message structure according to claim 3.

### 4. Description of General Aspects of Invention

First general aspects a method for identifying and using traffic information including media information shall be described in what follows. The method includes receiving traffic data for a location, the traffic data including a media object and a media-type identifier that enables a determination of a type associated with the media object. The method also includes determining, based on the media-type identifier, the type of the media object included within the received traffic data and identifying the media object within the received traffic data. The method further includes enabling retrieval of the media object based in part on the identified media object.

Implementations may include one or more additional features. For instance, in the method, media within the media object may represent traffic conditions experienced at the location. Media within the media object may represent weather conditions experienced at the location. Media within the media object may represent attractions found at the location. An indication of a length of the received traffic data and a size related to the media object may be received.

Also, in the method, receiving traffic data for a location may include receiving a media-format identifier that enables determination of a format of the media object. Identifying the media object may include identifying, based on both of the determined type of the media object and the media-format identifier, the format of the media object included within the received traffic data. Enabling retrieval of the media object may include enabling retrieval of the media object based in part on the identified format of the media object. The media-type identifier may enable a determination that the media object is one of several media types indicated by the media-type identifier. The several media types may include at least one of audio media, visual media, video media, audio visual media, and hypertext media.

The method may include determining, based on the media-type identifier, that the media object is audio media and may include determining, based on the determination that the media object is audio media and based on the media-format identifier included in the traffic data, whether the media object is formatted according to at least one of MPEG 1 audio layer I, MPEG I audio layer II, MPEG 1 audio layer III and uncompressed PCM audio.

The method may also include determining, based on the media-type identifier, that the media object is visual media and may also include determining, based on the determination that the media object is visual media and based on the media-format identifier included in the traffic data, whether the media object is formatted according to at least one of GIF, JFIF, BMP, PNG, and MNG.

The method may further include determining, based on the media-type identifier, that the media object is video media and may further include determining, based on the determination that the media object is visual media and based on the media-format identifier included in the traffic data, whether the media object is at least one of MPEG 1 video, MPEG 2 video, MPEG 4 video, H.263, and H.264.

The method may also include determining, based on the media-type identifier, that the media object is audio visual media and may also include determining, based on the determination that the media object is audio visual media and based on the media-format identifier included in the traffic data, whether the media object is formatted according to at least one of AV1, ASF, WMV and MOV.

The method may further include determining, based on the media-type identifier, that the media object is hypertext media and may further include determining, based on the determination that the media object is hypertext media and based on the media-format identifier included in the traffic data, whether the media object is at least one of HTML and XML.

Also, the method may further include receiving information corresponding to a message management structure including information corresponding to a generation time of information reflected in the traffic data. The generation time included within the received message management structure may relate to a plurality of message component structures that correspond to more than one of a predicted or current traffic tendency, a predicted or current amount of traffic, a predicted or current speed, or a predicted or current time to traverse a particular link. One or more of the message component structures may be associated with the information corresponding to media.

General aspects of a traffic information communication device for identifying and using traffic information including media information shall now be presented. The device includes a data receiving interface configured to receive media information corresponding to a location including a media object and a media-type identifier that enables a determination of a type associated with the media object. The device also includes a processing device configured to process the received media information.

Implementations may include one or more additional features. For instance, the media within the media object may represent at least one of traffic conditions experienced at the location, weather conditions experienced at the location, and attractions found at the location. The processing device may be configured to receive traffic data including information corresponding to a version number of information reflected in the traffic data. The version number may be associated with a specific syntax of the data where any one of multiple syntaxes may be used. The processing device may be configured to receive information corresponding to a message management structure including information corresponding to a generation time of information reflected in the traffic data. The processing device may be configured to receive information corresponding to a length of the received data and an indication of size related to the media object.

In the device, the data receiving interface may be further configured to receive media information corresponding to a location including a media-format identifier that enables determination of a format of the media object and the processing device may be further configured to process the received media information and to determine media information based at least in part on the information received. The processing device may be configured to enable a determination, based on the media-type identifier, that the media object is one of several media types indicated by the media-type identifier, wherein the several media types include at least one of audio media, visual media, video media, audio visual media, and hypertext media.

Also, the processing device may be configured to determine, based on the media-type identifier, that the media object is audio media. The processing device may be configured to enable a determination, based on the determination that the media object is audio media and based on the media-format identifier included in the traffic data, of whether the media object is formatted according to at least one of MPEG 1 audio layer I, MPEG I audio layer II, MPEG 1 audio layer III and uncompressed PCM audio.

Further, he processing device may be configured to determine, based on the media-type identifier, that the media object is visual media. The processing device may be configured to enable a determination, based on the determination that the media object is visual media and based on the media-format identifier included in the traffic data, of whether the media object is formatted according to at least one of GIF, JFIF, BMP, PNG, and MNG.

Also, the processing device may be configured to determine, based on the media-type identifier, that the media object is video media. The processing device may be configured to enable a determination, based on the determination that the media object is visual media and based on the media-format identifier included in the traffic data, of whether the media object is at least one of MPEG 1 video, MPEG 2 video, MPEG 4 video, H.263, and H.264.

Further, the processing device may be configured to determine, based on the media-type identifier, that the media object is audio visual media. The processing device may be configured to enable a determination, based on the determination that the media object is audio visual media and based on the media-format identifier included in the traffic data, of whether the media object is formatted according to at least one of AV1, ASF, WMV and MOV.

Also, the processing device may be configured to determine, based on the media-type identifier, that the media object is hypertext media. The processing device may be configured to enable a determination, based on the determination that the media object is hypertext media and based on the media-format identifier included in the traffic data, of whether the media object is at least one of HTML and XML.

Further general aspects of a traffic information communication device for identifying and using traffic information including media information shall now be presented. The device includes means for receiving traffic data for a location, the traffic data including a media object and a media-type identifier that enables a determination of a type associated with the media object and means for determining, based on the media-type identifier, the type of the media object included within the received traffic data. The device also includes means for identifying the media object within the received traffic data and means for enabling retrieval of the media object based in part on the identified media object.

Implementations may include one or more additional features. For instance, means for receiving traffic data for a location may include means for receiving a media-format identifier that enables determination of a format of the media object. Means for identifying the media object may include means for identifying, based on both of the determined type of the media object and the media-format identifier, the format of the media object included within the received traffic data. Means for enabling retrieval of the media object may include means for enabling retrieval of the media object

The details of one or more implementations are set forth in the accompanying drawings and the description below. Other features will be apparent from the description and drawings, and from the claims.

### 5. Brief Description of Drawings

FIG. 1 illustrates a network over which traffic information is provided;
FIG. 2 illustrates a format of the traffic information transmitted by radio;
FIGS. 3A-3D illustrate a transmission format of a congestion traffic information component included in a CTT event container;

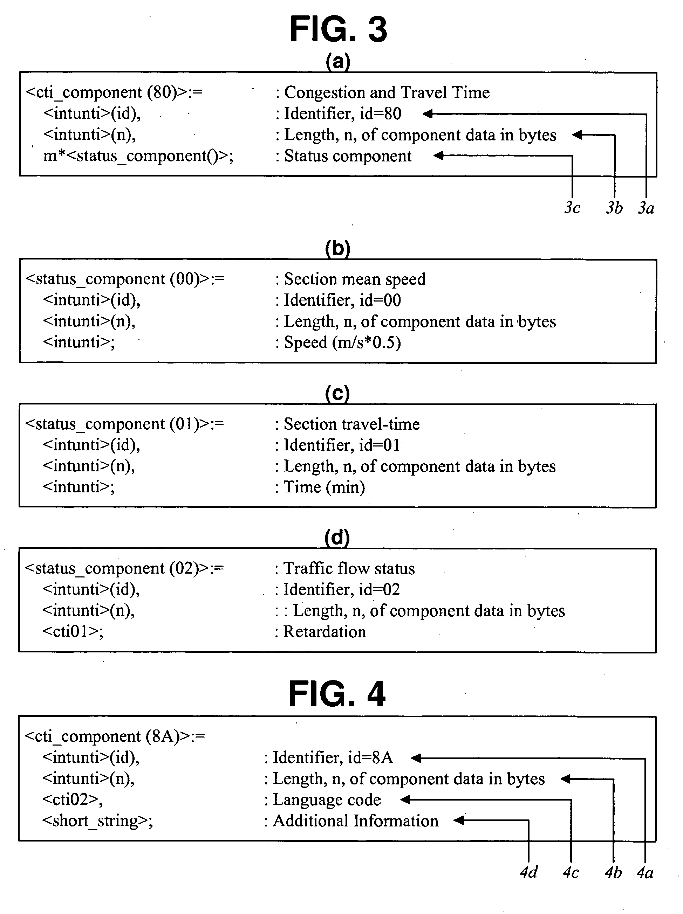

FIG. 3A illustrates syntax of the congestion traffic information component included in the CTT event container;
FIGS. 3B through 3D illustrate syntax of status components including information relating to a section mean speed, a section travel-time, and a flow status in the component of FIG. 3A, respectively;
FIG. 4 illustrates a syntax of an additional information component that may be included in the CTT event container;

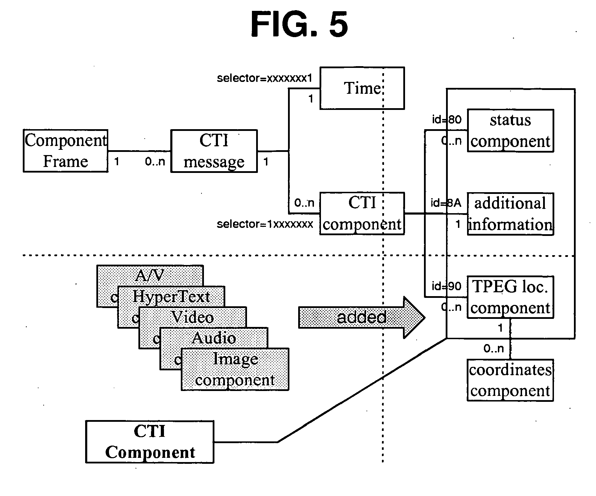

FIG. 5 illustrates a multimedia data component added to the CTT event container;

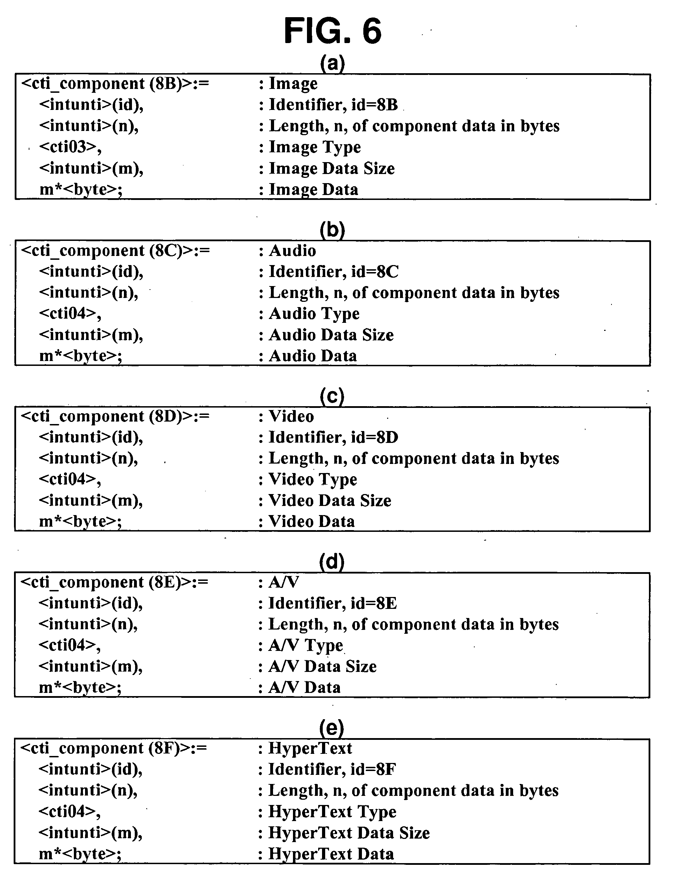

FIGS. 6A through 6E illustrate a syntax of CTT components, included in the CTT event container, carrying various multimedia data;

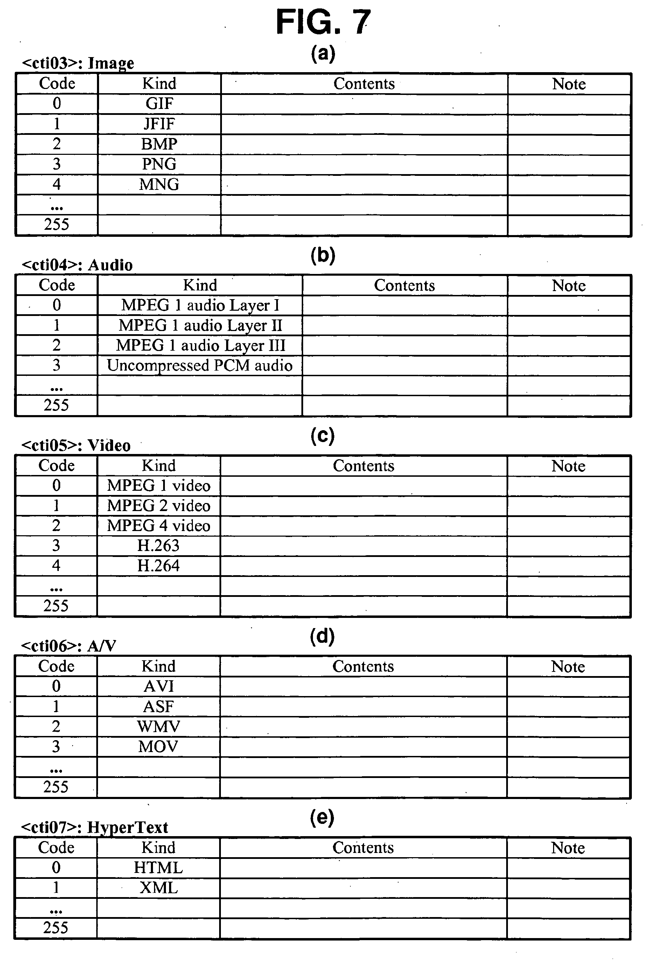

FIGS. 7A through 7E illustrate a table defining a type of the multimedia, respectively; and

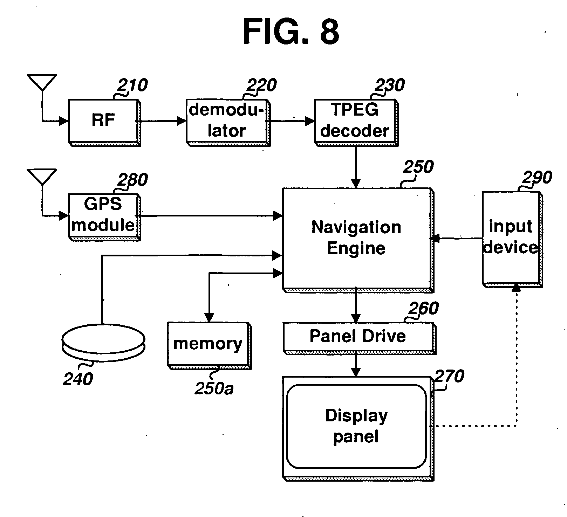

FIG. 8 illustrates a structure of a navigation terminal for receiving traffic information from a server.

### 6. Modes for Carrying out the Invention

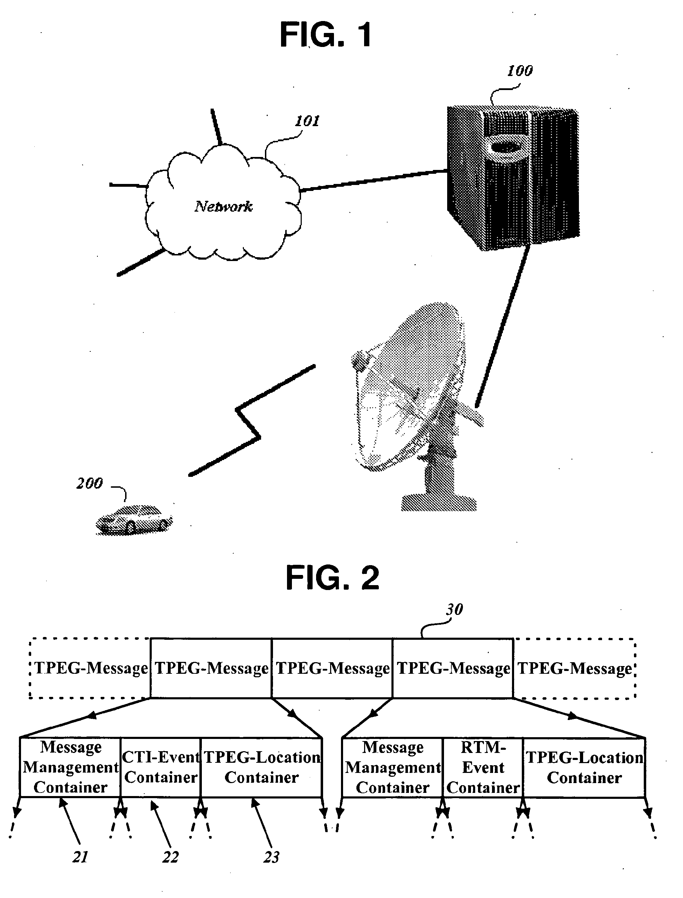

A process of encoding and decoding traffic information using a radio signal is described with reference to FIG. 1, which schematically depicts a network over which the traffic information is provided according to an implementation. In the network 101 of FIG. 1, by way of example, a traffic information providing server 210 of a broadcasting station reconfigures various congestion traffic information aggregated from an operator's input, another server over the network 101, or a probe car and broadcasts the reconfigured information by radio so that a traffic information receiving terminal such as a navigation device installed to a car 200 may receive the information.

The congestion traffic information broadcast by the traffic information providing server 100 via radio waves includes a sequence of message segments (hereafter, referred to as Transport Protocol Expert Group (TPEG) messages) as shown in FIG. 2. Among the sequence, one message segment, that is, the TPEG message includes a message management container 21, a congestion and travel-time information (CTT or CTI) event container 22, and a TPEG location container 23. It is noted that a TPEG message 30 conveying traffic information other than the CTT event, e.g., road traffic message (RTM) event, public transport information (PTI), weather information (WEA) are included in the sequence.

Overall contents relating to the message may be included in the message management container 21. Information relating to a message identification (ID), a version number, date and time, and a message generation time may be included in the message management container 21. The CTT event container 22 includes current traffic information of each link (road section) and additional information. The TPEG location container 23 includes location information relating to the link.

The CTT event container 22 may include a plurality of CTT components. If the CTT component includes the congestion traffic information, the CTT component is assigned an ID of 80h and includes status components indicative of the section mean speed, the section travel-time, and the retardation. In the description, specific IDs are described as assignments to structures associated with specific information. The actual value of an assigned ID (e.g., 80h) is exemplary, and different implementations may assign different values for specific associations or circumstances. Thus, the CTT components and status components may be used to provide various different types of data that may be signaled based on an identifier. For example, FIG. 3B and FIG. 6A illustrate a component with an identifier of 00 and 8B signaling, respectfully, speed and image media information.

In one implementation, the CTT event container 22 includes one or more CTT components that include a status information 24 portion, and a multimedia descriptor 25 portion that corresponds to the status information 24 portion. The status information 24 portion may include information directed to the status of a specific link or location. For example, the status information portion 24 may specify a level of traffic congestion, a speed of a link, or a travel time to traverse a link. The multimedia descriptor 25 portion includes one or more multimedia objects, such as, for example audio, video, images, hypertext, or a combination thereof, that may correspond to one more links and locations. FIG. 2 shows an image object 26 and an audio object 27 as an example of the contents of the multimedia descriptor 25. The image object 26 and the audio object 27 may be configured to be rendered concurrently.

FIG. 3A illustrates syntax of the congestion traffic information component. The ID of 80h is assigned to the congestion traffic information component as indicated by 3a, more than one (m-ary) status components are included as indicated by 3c, and a field is included to represent the total data size of the included status components in bytes as indicated by 3b.

Each status component includes the information relating to the section mean speed, the section travel-time, and/or the retardation as the syntax as shown in FIGS. 3B through 3D. An ID of 00 is assigned to the section mean speed, an ID of 01 is assigned to the section travel-time, and an ID of 02 is assigned to the retardation.

If an ID of 8Ah is assigned, the CTT component includes additional information or auxiliary information relating to the traffic information in a text form. FIG. 4 depicts syntax of the additional information component included in the CTT event container. The additional information component is assigned the ID of 8Ah as indicated by 4a, and includes a language code indicated by 4c, additional information configured in text form indicated by 4d, and a field representing the total data size of the components in bytes as indicated by 4b.

Since the message carried in the CTT event container is subordinate to the location information, the CTT message includes the location information. If the CTT component includes location information, the CTT component is assigned an ID of 90h and includes more than one TPEG location sub-container TPEG_loc_container.

According to an implementation, to transmit multimedia data, a multimedia CTT component relating to, for example, still image, audio, video, A/V, and hypertext, is included with the CTT event container as shown in FIG. 5.

Such a multimedia CTT component may include contents relating to the congestion traffic information component currently transmitted, e.g., still image, audio, and video such as animation that have different contents according to, for example, the section mean speed. For example, in one implementation, if a mean speed is below a threshold, a still image depicting slow moving traffic is included in the multimedia CTT component. If the mean speed is above the threshold, a still image depicting fast moving traffic is included in the multimedia CTT component.

Also, the multimedia CTT component may include contents relating to the location information transmitted together with the congestion traffic information. In more detail, the information as to the location of the congestion traffic information currently transmitted, such as, surrounding traffic condition, gas station, parking lot, historic place, accommodations, shopping facility, food, language (dialect) may be transmitted in the form of audio, video, and still image. For example, in one implementation, a location along a landmark may include a multimedia component associated with the location. Specifically, a CTT component associated with a link along the Washington Monument may include a multimedia CTT component including an image of the monument. Also, in various implementations, an image may be transmitted depicted various icons detailing the existence of structures at or near a location. Specifically, a multimedia CTT component may include an image depicting an icon for a restaurant, parking, and a shopping mall for a location including such features.

Moreover, the multimedia CTT component may include data representing contents as to a date and time corresponding to the current congestion traffic information, for example, weather, historical events which occurred on that day, in the multimedia such as audio, video, and still image. In one implementation, if a location is experiencing severe weather, a video may be included in a multimedia CTT component summarizing a weather report for the location.

FIGS. 6A through 6E depict structures of the CTT component which is included in the CTT event container and transmits various multimedia data.

In various implementations, the still image component in FIG. 6A is assigned an ID of 8Bh, and may include a field representing the total data size of the component in bytes, a still image type <cti03>, a field representing the data size of the still image in bytes, still image data. In particular, the field representing the total data size may represent the total amount of data including individual portions of data associated with the field representing the data size of the still image, the still image type <cti03>, and the still image data.

The audio component in FIG. 6B is assigned an ID of 8Ch, and may include a field representing the total data size of the component in bytes, an audio type <cti04>, a field representing the size of the audio data in bytes, and audio data.

The video component in FIG. 6C is assigned an ID of 8Dh, and may include a field representing the total data size of the component in bytes, a video audio type <cti05>, a field representing the size of the video data in bytes, and video data.

The A/V component in FIG. 6D is assigned an ID of 8Eh, and may include a field representing the total data size of the component in bytes, an A/V type <cti06>, a field representing the size of the A/V data in bytes, and audio data.

The hyper text component in FIG. 6E is assigned an ID of 8Fh, and may include a field representing the total data size of the component in bytes, a hyper text type <cti07>, a field representing the size of the hyper text data in bytes, and hyper text data.

The size of the multimedia data such as the still image, the audio, the video, the A/V, and the hypertext included in each multimedia component can be derived from the field representing the total data size of the component. Thus, the field representing the size of the multimedia data included in the multimedia component may be omitted.

FIGS. 6A-6E are example structures included in the CTT event container configured to transmit various multimedia data, and other or different structures may be included. For example, an animation component enabling the display of a software based animation may be included.

According to one implementation, <cti03>, <cti04>, <cti05>, <cti06>, and <cti07> define the type of the still image, the audio, the video, the A/V, and the hypertext, respectively. FIGS. 7A through 7E show tables defining kinds of the multimedia type, respectively.

Referring to FIG. 7A, the still image type <cti03> arranges GIF, JFIF, BMP, PNG, MNG and the like, with 0 through 4 assigned respectively. In FIG. 7B, the audio type <cti04> arranges MPEG 1 audio layer I, MPEG 1 audio layer II, MPEG 1 audio layer III, Uncompressed PCM audio and the like, with 0 through 3 assigned respectively.

In FIG. 7C, the video type <cti05> arranges MPEG 1 video, MPEG 2 video, MPEG 4 video, H.263, H.264 and the like, with 0 through 4 assigned respectively. In FIG. 7D, the A/V type <cti06> arranges AVI, ASF, WMV, MOV and the like, with 0 through 3 assigned respectively. In FIG. 7E, the hypertext type <cti07> arranges HTML, XML and the like, with 0 and 1 assigned respectively.

It should be appreciated that the IDs 8B through 8F assigned to the multimedia components, the tables <cti03> through <cti07> defining the type of the multimedia, and the kinds and the codes arranged in the tables are exemplified to ease understanding. Thus, they are not limited to any examples and can be changed.

Instead of assigning a separate component ID to each multimedia data, all the multimedia data may be carried by a multimedia component having the same ID. More specifically, the ID of 8Bh, for example, is assigned to a multimedia component including the multimedia data, the tables defining the kinds of the multimedia data types in FIGS. 7A through 7E are combined to a single table, and the single table, for example, <cit03> defines the types of the multimedia data.

In <cti03> defining the types of the multimedia data, a range of a value may be classified and defined for each multimedia data kind. By way of example, the still image type is '0Xh', the audio type is '1Xh', the video type is '2Xh', the A/V type is '3Xh', and the hypertext type '4Xh' (X ranges from 0 to F). As a result, a decoder may confirm the kind of the multimedia data based on the type of the multimedia data included in the multimedia component.

The server 100 may configure the current congestion traffic information and the location information as shown in FIGS. 3 and 6 according to the current traffic information aggregated through several paths and a stored traffic information database, and may transmit the configured information to the traffic information receiving terminal. Additionally, the server 100 may convert contents relating to the traffic information to various multimedia data such as text, still image, audio, video, A/V, hyper text and the like, and may load the converted multimedia data in the component to transmit, a shown in FIG. 4 or FIGS. 5A through 5E.

FIG. 8 depicts a structure of a navigation terminal installed to a vehicle to receive the traffic information from the server 100 according to an implementation . FIG. 8 is an example implementation of a system for receiving and utilizing traffic information. Other systems may be organized differently or include different components.

In FIG. 8, the navigation terminal includes a tuner 210, a demodulator 220, a TPEG decoder 230, a global positioning system (GPS) module 280, a storage structure 240, an input device 290, a navigation engine 250, a memory 250a, a display panel 270, and a panel driver 260. The tuner 210 outputs the modulated traffic information signal by tuning a signal band over which the traffic information is transmitted. The demodulator 220 outputs the traffic information signal by demodulating the modulated traffic information signal. The TPEG decoder 230 acquires various traffic information by decoding the demodulated traffic information signal. The GPS module 280 receives satellite signals from a plurality of low earth orbit satellites and acquires the current location (longitude, latitude, and height). The storage structure 240 stores a digital map including information about links and nodes, and diverse graphical information. The input device 290 receives a user's input. The navigation engine 250 controls an output to the display based on the user's input, the current location, and the acquired traffic information. The memory 250a temporarily stores data. The display panel 270 displays video. The display panel 270 may be a liquid crystal display (LCD) or organic light emitting diodes (OLED). The panel drive 260 applies a driving signal corresponding to graphical presentation to be displayed to the display panel 270. The input device 290 may be a touch screen equipped to the display panel 270.

The navigation engine 250 may include a decoding module for various multimedia data to reproduce the multimedia data received together with the traffic information.

The tuner 210 tunes the signal transmitted from the server 100, and the demodulator 220 demodulates and outputs the tuned signal according to a preset scheme. Next, the TPEG decoder 230 decodes the demodulated signal to the TPEG message sequence as configured in FIG. 2, analyzes TPEG messages in the message sequence, and then provides the navigation engine 250 with the necessary information and/or the control signal according to the message contents.

The TPEG decoder 230 extracts the data/time and the message generation time from the message management container in each TPEG message, and checks whether a subsequent container is the CTT event container based on the 'message element' (i.e. an identifier). If the CTT event container follows, the TPEG decoder 230 provides the navigation engine 250 with the information acquired from the CTT components in the container so that the navigation engine 250 takes charge of the display of the traffic information and/or the reproduction of the multimedia data. Providing the navigation engine 250 with the information may include determining, based on identifiers, that the traffic information includes a message management container including status information within various message components within the message management container. The components may each include different status information associated with different links or locations and identifiers associated with the different status information. The containers and components may each include information associated with a generation time, version number, data length, and identifiers of included information.

The TPEG decoder 230 checks based on the ID in the CTT component whether the CTT component includes the congestion traffic information, the additional information, or the multimedia data. The TPEG decoder 230 analyzes the congestion traffic information or the additional information included in the CTT component and provides the analyzed information to the navigation engine 250. Also, the TPEG decoder 230 checks the kind and the type of the multimedia data included in the CTT component using the ID and/or the type information included in the CTT component, and provides the checked kind and/or type to the navigation engine 250. The multimedia data is extracted from the CTT component and also provided to the navigation engine 250. The TPEG decoder 230 manages the tables in relation to the kinds and/or the types of the multimedia data.

The TPEG decoder 230 acquires location information corresponding to the current traffic information from the subsequent TPEG location container. According to the type information of the TPEG location container, the location information may be coordinate (longitude and latitude) of start and end points or the link, i.e., the link ID assigned to the road section.

When the storage structure 240 is equipped, the navigation engine 250 specifies a section corresponding to the received information in reference to the information relating to the links and the nodes in the storage structure 240, and if necessary, may utilize the coordinates of the received link by converting the coordinates to the link ID or converting the link ID to the coordinates.

The navigation engine 250 may read out from the storage structure 240 the digital map of a certain area based on the current coordinates which may be received from the GPS module 280, and may display the digital map on the display panel 270 via the panel drive 260. In doing so, the place corresponding to the current location may be marked by a specific graphical symbol.

The navigation engine 250 may control display of the section mean speed information received from the TPEG decoder 230 in the section corresponding to the coordinates or the link ID of the location container which follows the container carrying the section mean speed information. The section mean speed may be displayed by changing colors or indicating numbers to the corresponding sections. By way of example of the ordinary road, the red denotes 0∼10 km/h, the orange denotes 10∼20 km/h, the green denotes 20∼40 km/h, and the blue denotes more than 40 km/h.

A terminal without the storage structure 240 storing the digital map may display the section mean speed by colors or by numbers with respect to only links ahead of the current path. When the path of the vehicle having the navigation terminal is designated in advance, the section mean speed may be displayed with respect to the links along the path, rather than the links ahead.

According to the user's request, the navigation engine 250 may control the display panel 270 to display the section travel-time and the retardation of links received from the TPEG decoder 230, instead of or together with the section mean speed.

When the navigation engine 250 is equipped with a decoding module capable of reproducing the multimedia data, the navigation engine 250 may inform from the TPEG decoder 230, of the kind of the multimedia CTT component (e.g., audio component, video component, etc.), and the type of the corresponding multimedia data (e.g., GIF, BMP, etc. of the still image), and may control the decoding module. Thus, the multimedia data provided from the TPEG decoder 230 may be reproduced though the display panel 270 and/or a speaker.

If the multimedia data includes a video, the video may be displayed on the display panel 270 as a whole or in a small window on the display panel 270.

In light of the foregoing as set forth above, the traffic-related information is transmitted in the multimedia form so that the user may intuitively acquire the traffic conditions.

In broadcast systems that include interactive media, further steps may be included. In particular, a step of requesting a media format or other identifier, may be included. A media format identifier may be selected by a mobile station or other device.

Furthermore, since the traffic-related information is provided in the multimedia form without modifying the TPEG standard, the TPEG standard may be expanded. Although various implementations have been shown and described, it will be appreciated that changes may be made in these implementations.

## Claims

1. A method for processing a traffic message structure (30), the method comprising:
receiving the traffic message structure including:
a traffic data structure (22) having an average speed information and a traffic flow status information for a particular link;
a management data structure (21) having an information corresponding to a generation time of the traffic message, and an information corresponding to a version number of information reflected in the traffic data;
an additional data structure having an identifier (4a) indicating that the traffic message has the additional information, information (4c) corresponding to a language code for the additional information and text string information (4d) and
a location data structure (23) having a location information for the particular link; and
extracting the traffic message including the traffic data structure and the location data structure.

2. The method of the claim 1, wherein the traffic message structure includes a multimedia information (25).

3. A device for processing a traffic message structure (30), the device comprising:
a means for receiving the traffic message structure including:
a traffic data structure (22) having an average speed information and a traffic flow status information for a particular link;
a management data structure (21) having an information corresponding to a generation time of the traffic message, and an information corresponding to a version number of information reflected in the traffic data;
an additional data structure having an identifier (4a) indicating that the traffic message has the additional information, information (4c) corresponding to a language code for the additional information and text string information (4d), and
a location data structure (23) having a location information for the particular link; and
a means for extracting the traffic message including the traffic data structure and the location data structure.

4. The device of the claim 3, wherein the device is configured to receive a multimedia information (25) included in the traffic message structure.

5. The device of the claim 4, wherein the device is configured to receive a media-type identifier to identify a type associated with the multimedia information.

6. The device of the claim 4, wherein the multimedia information represents traffic conditions corresponding to the particular location.

7. The device of the claim 4, wherein the multimedia information represents weather conditions corresponding to the particular location.

8. The device of the claim 4, wherein the multimedia information represents attractions found corresponding to the particular location.

9. The device of the claim 4, wherein the device is configured to receive an indication of a size related to the multimedia information.

10. The device of the claim 5, wherein the media-type identifier identifies that the multimedia information is audio media or visual media or video media or audio visual media or hypertext media.

11. The device of the claim 10, wherein the device is configured to receive a media-format identifier to identify a format of the multimedia information.

12. The device of the claim 11, wherein the media-type identifier indicates the type of the multimedia information is audio media, the media-format identifier identifies whether the multimedia information is formatted according to at least one of MPEG 1 audio layer I, MPEG I audio layer II, MPEG 1 audio layer III and uncompressed PCM audio.

13. The device of the claim 11, wherein the media-type identifier indicates the type of the multimedia information is visual media, the media-format identifier identifies whether the multimedia information is formatted according to at least one of GIF, JFIF, BMP, PNG, and MNG.

14. The device of the claim 11, wherein the media-type identifier indicates the type of the multimedia information is video media, the media-format identifier identifies whether the multimedia information is formatted according to at least one of MPEG 1 video, MPEG 2 video, MPEG 4 video, H.263, and H.264.

15. The device of the claim 11, wherein the media-type identifier indicates the type of the multimedia information is audio visual media, the media-format identifier identifies whether the multimedia information is formatted according to at least one of AV1, ASF, WMV and MOV.

## Patentansprüche

1. Verfahren zur Verarbeitung einer Verkehrsnachrichtenstruktur (30), wobei das Verfahren aufweist:
Empfangen der Verkehrsnachrichtenstruktur, die aufweist:
eine Verkehrsdatenstruktur (22) mit einer Durchschnittsgeschwindigkeitsinformation und einer Verkehrsfluß-Zustandsinformation für eine bestimmte Verbindung;
eine Managementdatenstruktur (21) mit einer Information, die einer Erzeugungszeit der Verkehrsnachricht entspricht, und einer Information, die einer Versionsnummer von in den Verkehrsdaten enthaltener Information entspricht;
eine Zusatzdatenstruktur mit einer Identifizierung (4a), die angibt, daß die Verkehrsnachricht die Zusatzinformation hat, Information (4c), die einem Sprachcode für die Zusatzinformation entspricht, und Textfolgeinformation (4d); und
eine Ortsdatenstruktur (23) mit einer Ortsinformation für die bestimmte Verbindung; und
Extrahieren der Verkehrsnachricht mit der Verkehrsdatenstruktur und der Ortsdatenstruktur.

2. Verfahren nach Anspruch 1, wobei die Verkehrsnachrichtenstruktur eine Multimediainformation (25) aufweist.

3. Vorrichtung zur Verarbeitung einer Verkehrsnachrichtenstruktur (30), wobei die Vorrichtung aufweist:
eine Einrichtung zum Empfangen der Verkehrsnachrichtenstruktur, die aufweist:
eine Verkehrsdatenstruktur (22) mit einer Durchschnittsgeschwindigkeitsinformation und einer Verkehrsfluß-Zustandsinformation für eine bestimmte Verbindung;
eine Managementdatenstruktur (21) mit einer Information, die einer Erzeugungszeit der Verkehrsnachricht entspricht, und einer Information, die einer Versionsnummer von in den Verkehrsdaten enthaltener Information entspricht;
eine Zusatzdatenstruktur mit einer Identifizierung (4a), die angibt, daß die Verkehrsnachricht die Zusatzinformation hat, Information (4c), die einem Sprachcode für die Zusatzinformation entspricht, und Textfolgeinformation (4d); und
eine Ortsdatenstruktur (23) mit einer Ortsinformation für die bestimmte Verbindung; und
eine Einrichtung zum Extrahieren der Verkehrsnachricht mit der Verkehrsdatenstruktur und der Ortsdatenstruktur.

4. Vorrichtung nach Anspruch 3, wobei die Vorrichtung konfiguriert ist, eine Multimediainformation (25) zu empfangen, die zur Verkehrsnachrichtenstruktur gehört.

5. Vorrichtung nach Anspruch 4, wobei die Vorrichtung konfiguriert ist, eine Medientypidentifizierung zu empfangen, um einen der Multimediainformation zugeordneten Typ zu identifizieren.

6. Vorrichtung nach Anspruch 4, wobei die Multimediainformation Verkehrszustände darstellt, die dem bestimmten Ort entsprechen.

7. Vorrichtung nach Anspruch 4, wobei die Multimediainformation Wetterbedingungen darstellt, die dem bestimmten Ort entsprechen.

8. Vorrichtung nach Anspruch 4, wobei die Multimediainformation Anziehungspunkte darstellt, die dem bestimmten Ort entsprechend vorgefunden werden.

9. Vorrichtung nach Anspruch 4, wobei die Vorrichtung konfiguriert ist, eine Anzeige einer mit der Multimediainformation in Beziehung stehenden Größe zu empfangen.

10. Vorrichtung nach Anspruch 5, wobei die Medientypidentifizierung identifiziert, daß die Multimediainformation Audiomedien oder visuelle Medien oder Videomedien oder audiovisuelle Medien oder Hypertext-Medien ist.

11. Vorrichtung nach Anspruch 10, wobei die Vorrichtung konfiguriert ist, eine Medienformatidentifizierung zu empfangen, um ein Format der Multimediainformation zu identifizieren.

12. Vorrichtung nach Anspruch 11, wobei dann, wenn die Medientypidentifizierung anzeigt, daß der Typ der Multimediainformation Audiomedien ist, die Medienformatidentifizierung identifiziert, ob die Multimediainformation mindestens gemäß einem der folgenden Formate formatiert ist: MPEG-1-Audioschicht I, MPEG-1-Audioschicht II, MPEG-1-Audioschicht III und unkomprimierte PCM-Audiodaten.

13. Vorrichtung nach Anspruch 11, wobei dann, wenn die Medientypidentifizierung anzeigt, daß der Typ der Multimediainformation visuelle Medien ist, die Medienformatidentifizierung identifiziert, ob die Multimediainformation mindestens gemäß einem der folgenden Formate formatiert ist: GIF, JFIF, BMP, PNG und MNG.

14. Vorrichtung nach Anspruch 11, wobei dann, wenn die Medientypidentifizierung anzeigt, daß der Typ der Multimediainformation Videomedien ist, die Medienformatidentifizierung identifiziert, ob die Multimediainformation mindestens gemäß einem der folgenden Formate formatiert ist: MPEG-1-Video, MPEG-2-Video, MPEG-4-Video, H.263 und H. 264.

15. Vorrichtung nach Anspruch 11, wobei dann, wenn die Medientypidentifizierung anzeigt, daß der Typ der Multimediainformation audiovisuelle Medien ist, die Medienformatidentifizierung identifiziert, ob die Multimediainformation mindestens gemäß einem der folgenden Formate formatiert ist: AVI, ASF, WMV und MOV.

## Revendications

1. Procédé pour traiter une structure de message de trafic (30), le procédé comprenant : la réception de la structure de message de trafic comprenant :
une structure de données de trafic (22) ayant des informations de vitesse moyenne et des informations d'état de flux de trafic pour une liaison particulière ;
une structure de données de gestion (21) ayant des informations correspondant à un temps de génération du message de trafic, et des informations correspondant à un numéro de version d'informations reflétées dans les données de trafic ;
une structure de données supplémentaires ayant un identifiant (4a) indiquant que le message de trafic a les informations supplémentaires, les informations (4c) correspondant à un code de langue pour des informations supplémentaires et les informations de chaîne de texte (4d) ; et
une structure de données d'emplacement (23) ayant des informations d'emplacement pour la liaison particulière ; et
l'extraction du message de trafic comprenant la structure de données de trafic et la structure de données d'emplacement.

2. Procédé selon la revendication 1, dans lequel la structure de message de trafic comprend des informations multimédia (25).

3. Dispositif pour traiter une structure de message de trafic (30), le dispositif comprenant : un moyen pour recevoir la structure de message de trafic comprenant :
une structure de données de trafic (22) ayant des informations de vitesse moyenne et des informations d'état de flux de trafic pour une liaison particulière ;
une structure de données de gestion (21) ayant des informations correspondant à un temps de génération du message de trafic, et des informations correspondant à un numéro de version d'informations reflétées dans les données de trafic ;
une structure de données supplémentaire ayant un identifiant (4a) indiquant que le message de trafic a des informations supplémentaires, des informations (4c) correspondant à un code de langue pour les informations supplémentaires et les informations de chaîne de texte (4d), et
une structure de données d'emplacement (23) ayant des informations d'emplacement pour la liaison particulière ; et
un moyen pour extraire le message de trafic comprenant la structure de données de trafic et la structure de données d'emplacement.

4. Dispositif selon la revendication 3, dans lequel le dispositif est configuré pour recevoir des informations multimédia (25) comprises dans la structure de message de trafic.

5. Dispositif selon la revendication 4, dans lequel le dispositif est configuré pour recevoir un identifiant de type média pour identifier un type associé aux informations multimédia.

6. Dispositif selon la revendication 4, dans lequel les informations multimédia représentent des conditions de trafic correspondant à l'emplacement particulier.

7. Dispositif selon la revendication 4, dans lequel les informations multimédia représentent des conditions météorologiques correspondant à l'emplacement particulier.

8. Dispositif selon la revendication 4, dans lequel les informations multimédia représentent des attractions trouvées correspondant à l'emplacement particulier.

9. Dispositif selon la revendication 4, dans lequel le dispositif est configuré pour recevoir une indication d'une taille concernant les informations multimédia.

10. Dispositif selon la revendication 5, dans lequel l'identifiant de type média identifie que les informations multimédia sont un média audio ou un média vidéo ou un média audiovisuel ou un média hypertexte.

11. Dispositif selon la revendication 10, dans lequel le dispositif est configuré pour recevoir un identifiant de format de média pour identifier un format des informations multimédia.

12. Dispositif selon la revendication 11, dans lequel l'identifiant de type média indique que le type des informations multimédia est un média audio, l'identifiant de format média identifie si les informations multimédia sont formatées selon au moins un de la couche audio I de MPEG 1, de la couche audio II de MPEG 1, de la couche audio III de MPEG I et l'audio PCM décompressée.

13. Dispositif selon la revendication 11, dans lequel l'identifiant de type média indique que le type d'informations multimédia est un média visuel, l'identifiant de format média identifie si les informations multimédia sont formatées selon au moins un de GIF, JFIF, BMP, PNG et MNG.

14. Dispositif selon la revendication 11, dans lequel l'identifiant de type média indique que le type d'informations multimédia est un média vidéo, l'identifiant de format média identifie si les informations multimédia sont formatées selon au moins un de vidéo MPEG 1, vidéo MPEG 2, vidéo MPEG 4, H.263 et H.264.

15. Dispositif selon la revendication 11, dans lequel l'identifiant de type média indique que le type d'informations multimédia est un média audiovisuel, l'identifiant de format média identifie si les informations multimédia sont formatées selon au moins un de AVI, ASF, WMV et MOV.
